# EUROPÄISCHE PATENTSCHRIFT

(11) **EP 1 816 716 B1**
(45) Veröffentlichungstag und Bekanntmachung des Hinweises auf die Patenterteilung: **30.05.2012**
(21) Anmeldenummer: 06126254.9
(22) Anmeldetag: 15.12.2006
(51) Int. Cl.: H02G 1/12

(54) **Abmantelwerkzeug**
Stripping tool
Outil à dénuder

(30) Priorität: 07.02.2006 DE 202006002004 U
(43) Veröffentlichungstag der Anmeldung: 08.08.2007
(73) Patentinhaber: Weidmüller Interface GmbH & Co. KG, 32758 Detmold (DE)
(72) Erfinder: Schmode, Hartmut, 32825 Blomberg (DE); Wedler, Andreas, 32756 Detmold (DE); Hetland, Detlev, 32760 Detmold (DE); David, Bernd, 32756 Detmold (DE); Klaas, Detlev, 33039 Nieheim (DE); Scheel, Ernst-Heinrich, 31787 Hameln (DE); Witt, John, 32760 Detmold (DE); Bachmann, Werner, 32139 Spenge (DE); Drescher, Carsten, 32758 Detmold (DE); Lucht, Günter, 32805 Horn-Bad Meinberg (DE)
(74) Vertreter: Dantz, Jan Henning

(56) Entgegenhaltungen:
- EP-A1- 0 376 505
- EP-A2- 1 294 062
- DE-U1- 20 315 756
- GB-A- 2 359 671

## Beschreibung

Die Erfindung bezieht sich auf ein Abmantelwerkzeug für ein Flachkabel, welches aus mehreren Leitern und einem die Leiter umhüllenden Mantel besteht, und ein am Flachkabel festsetzbares Klemmelement und einen mit einem Schneidmesser versehenen Messerhalter derart aufweist, dass das Klemmelement als Führung für den bewegbaren Messerhalter ausgebildet ist.

Ein Flachkabel weist in der Regel mehrere Leiter auf, die jeweils wenigstens eine Leitungsader, eine diese umgebenden Isolierung und einen die Leiter nebst deren Isolierung einbettenden Mantel aufweisen.

Bei der Erstellung einer Elektroinstallation kann es erforderlich werden, daß der äußere Mantel über einen bestimmten Abschnitt des Flachkabels entfernt wird, um beispielsweise eine Abzweigung herzustellen. Zum Entfernen dieses Abschnittes des Mantels wird ein Messer verwendet, um den Mantel mit zwei beabstandeten und quer zu den Leitern umlaufenden Schnitten zu versehen. Diese Arbeitsweise ist recht umständlich und auch zeitraubend. Ein weiterer Nachteil ist noch darin zu sehen, daß die Leiter oder deren Isolierungen relativ leicht beschädigt werden. Besonders schwierig ist zudem das Entfernen des Mantels zur Erstellung einer Abzweigung an einem bereits installierten Flachkabel.

In der DE 203 15 756 U1 wird eine automatische Abisolierzange beschrieben, die bevorzugt für Flachkabel eingesetzt wird. Diese Abisolierzange enthält eine Messereinheit, die aus einem Messerbügel und einem damit schwenkbar verbundenen Messerschlitten besteht. Es ist ferner eine Klemmeinrichtung vorhanden, in der die Messereinheit verschiebbar gelagert ist. An dessen vorderen Ende ist wenigstens eine Klemmbacke angeordnet und die eine Führungskulisse für eine Kniehebelendachse aufweist. Ferner ist diese Abisolierzange mit einem Grundgehäuse versehen, in dem die Messereinheit verschiebbar geführt ist und wenigstens eine Klemmbacke aufweist. Ferner enthält sie einen Handgriffbereich und ein Klemmenarmschwenklager, an dem die Klemmeneinheit gelagert ist. Darüber hinaus erfolgt die Betätigung durch eine Griffhebeleinheit, die an einem Griffhebel schwenkbar mit dem Grundgehäuse verbunden ist.

Diese Abisolierzange ist konstruktiv relativ aufwändig und demzufolge störanfällig und kostenintensiv.

In der GB 2 359 671 A wird ein Abmantelwerkzeug beschrieben, in das ein Rundkabel mittels eines Klemmkörpers festgeklemmt wird, und das Abmantelwerkzeug wird um das Rundkabel herum geführt. Dieses Abmantelwerkzeug kann als zweiteiliges Werkzeug angesehen werden und besteht aus einer Handhabe 14 und einem damit einstückig verbundenen Klemmelement, welches in einen Grundkörper eingeführt wird, welches das Rundkabel aufnimmt. Der Grundkörper ist mit einem Gegenlager versehen und in etwa diametral gegenüberliegend mit einem Messer. Das Rundkabel wird jedoch nicht festgeklemmt, da beim Schineidvorgang dieses fest steht und das eigentliche Abmantelwerkzeug durch Schwenken um 360° den Schneidvorgang ausführt.

Dieses Abmantelwerkzeug ist für Flachkabel nicht geeignet.

In der EP 1 294 062 A2 wird eine Vorrichtung zur Entfernung einer Isolierstoffschicht aus polymerem Werkstoff von der Oberseite eines in einem Flachbandleiter gehaltenen Signalleiters beschrieben. Diese Vorrichtung ist mit einer Klemmeinrichtung zum unverrückbaren Andrücken des Flachbandleiters an eine im Wesentlichen eben ausgebildete Tragfläche ausgerüstet. Es enthält ferner einen relativ zu dem Flachbandleiter verschiebbaren Messerblock, der mit dem Flachbandleiter in Eingriff bringbar ist.

Der Messerblock ist parallel zur Tragfläche verschiebbar und enthält wenigstens eine Schabschneide sowie wenigstens eine Trennschneide. Die Schabschneide liegt in einer Schnittebene, die parallel zur Ebene der Tragfläche steht. Die Trennschneide steht im Wesentlichen senkrecht zur Schnittbewegung.

Diese Vorrichtung ist zum Freilegen der Adern eines Kabels geeignet und nicht um den Mantel eines Flachkabels gezielt aufzuschneiden.

Der Erfindung liegt die Aufgabe zugrunde, ein Abmantelwerkzeug zu schaffen, mit dem das Entfernen eines bestimmten Abschnittes des Mantels insbesondere auch an einem bereits installierten Flachkabel erleichtert wird. Darüber hinaus soll sichergestellt sein, daß der Mantel zwar vollständig durchgeschnitten wird, daß jedoch die Umhüllungen der Leiter nicht beschädigt werden.

Die Erfindung wird durch den Gegenstand des Anspruchs 1 gelöst.

Danach weist das Abmantelwerkzeug ein am Flachkabel festsetzbares Klemmelement und einen mit einem Schneidmesser versehenen Messerhalter auf, wobei das Klemmelement als Führung für den bewegbaren Messerhalter ausgebildet ist.

Das Abmantelwerkzeug bietet damit nicht nur die Messerfunktion an sich sondern auch eine Art Schablonenfunktion für durchzuführende Schnitte.

Der Messerhalter ist so ausgelegt, daß mittels des Schneidmessers der Mantel sauber durchtrennt wird, so daß der betreffende Abschnitt des Mantels in der Regel ohne Nacharbeit oder ein zusätzliches Einreißen von den Leitern abgezogen werden kann. Da er bei als Führung für den Messerhalter dient, sind exakte Schnitte sichergestellt.

Da das Klemmelement klammerartig ausgebildet ist und zwei gelenkig miteinander verbundene Klemmbacken auf weist, ergibt sich eine konstruktiv einfache Ausführung. Die Klemmbacken werden zum Einlegen des Kabels geöffnet. Durch Federwirkung wird dann das Flachkabel zwischen den beiden Klemmbacken festgesetzt.

Damit das Abmantelwerkzeug bei Nichtgebrauch platzsparend aufbewahrt werden kann, ist vorgesehen, daß die Innenkonturen der zusammengefahrenen Klemmbacken einen Hohlraum begrenzen, in den der Messerhalter einbringbar und in dem er aufbewahrbar ist.

Die Handhabung des Abmantelwerkzeugs bei der Durchführung der Schnitte wird besonders günstig, wenn die Klemmbacken miteinander korrespondierende, in den Längsrichtungen der Klemmbacken sich erstreckenden Führungsschlitze aufweisen, in denen der an das Schneidmesser angrenzende Bereich zur Durchführung von Schnitten quer zu den Leitern verfahrbar ist. Sofern stets die gegenüberliegenden Schnitte durch Umsetzen des Messerhalters in den Mantel eingeschnitten werden, ergibt sich, daß die beiden Schnitte versatzfrei zueinander liegen.

Damit der Messerhalter nicht nur in Schneidrichtung durch die Nuten geführt ist, sondern auch hinsichtlich der Eintauchtiefe des Schneidmessers in den Mantel, ist vorgesehen, daß die Nuten von Ausnehmungen mit gegenüber den Nuten größeren Abmessungen umgeben sind, so daß die an die Nuten angrenzenden Ränder Auflageflächen für den Messerhalter bilden. Dadurch wird verhindert, daß die Umhüllungen der Leiter angeschnitten werden.

Die Ausnehmungen sind an den äußeren, einander abgewandt liegenden Seiten der Klemmbacken vorgesehen.

Damit der Messerhalter gegenüber der Klemmbacke stets exakt angeordnet werden kann, ist vorgesehen, daß der Messerhalter in dem das Schneidmesser aufweisenden Endbereich einen Führungsansatz aufweist, so daß die dadurch gebildeten Flächen gegen die die Nut begrenzenden Ränder anschlagen, und dass das Schneidmesser in einem zweiteiligen Schiebeelement festgelegt ist. Der Führungsansatz ist so gestaltet, daß er schließend innerhalb der Nut verfahrbar ist.

Die Schnittiefe ist bei den zu bearbeitenden Flachkabeln äußerst genau einzustellen. Damit dies in einfachster Weise exakt durchführbar ist, ist vorgesehen, daß der Messerhalter eine Einrichtung zur Einstellung der Schnitttiefe aufweist. Diese kann mit einem das Schneidmesser aufnehmenden Schiebeelement ausgestattet sein.

Das Schiebeelement ist nach einer Variante in ein Halterohr eingesetzt, welches mit einer Ringnut ausgestattet ist, in die zur axialen Sicherung ein Sicherungsbolzen eingreift. Ferner ist in dem Halterohr eine spiralförmig verlaufende Nut vorgesehen, in die ein Bolzen eingreift, der Bohrungen des Schiebeelementes und des Schneidmessers durchdringt. Damit das Halterohr ohne Werkzeug und ohne großen Kraftaufwand gedreht werden kann ist vorgesehen, daß auf das dem Schneidmesser gegenüberliegende Ende eine Handhabe festgesetzt ist. Diese Handhabe ist in bevorzugter Ausführung ein Drehknopf, der gegenüber der Stirnfläche des Messerhalters vorsteht. Damit sich die Schnittiefe nicht selbsttätig verändert, ist vorgesehen, daß das Halterohr mittels einer Sicherungsschraube gegen Drehung gesichert ist. Diese Sicherungsschraube ist in bevorzugter Ausführung ein Gewindestift. Zur Verdrehung des Gewindebolzens muß die Sicherungsschraube zunächst gelöst werden.

Die Klemmbacken sind im Querschnitt U-förmig gestaltet, wobei die seitlichen Ränder Aussparungen aufweisen, die sich von einem Stirnende in Richtung zum gegenüberliegenden Stirnende erstrecken, jedoch im Abstand zu diesem enden. Dadurch wird eine Tasche gebildet, in der der zu bearbeitende Flachschlauch eingelegt werden kann. Die Aussparungen sind so gewählt, daß der Flachschlauch zur Bearbeitung festgeklemmt werden kann. Da die Aussparungen im Abstand zu dem vorherigen Stirnende des Klemmelementes enden, wird ein Anschlag gebildet, an den der Längsrand des Flachschlauches anliegt, so daß dieser stets exakt positioniert ist. Die die Aussparungen begrenzenden Ränder der Klemmbacken können mit vorstehenden Zähnen ausgestattet sein, die sich in den Mantel eingraben, so daß sinngemäß der Flachschlauch formschlüssig festgelegt ist.

Während die Nuten der Klemmbacken bei der Durchführung der Schnitte quer zu den Leitern des Flachkabels die Führung für den Messerhalter bilden, wird zum Herstellen eines Längsschnittes der Messerhalter in den durch die gegenüberliegenden Klemmbacken begrenzten Hohlraum eingebracht. Analoges gilt für die Vervollständigung der Querschnitte um die Seitenbereiche des Flachkabels.

Damit auch beim Einbringen dieser Schnitte das Klemmelement eine Führung bildet, ist vorgesehen, daß das Klemmelement an der der Tasche zur Klemmung des eingelegten Flachkabels gegenüberliegenden Stirnendbereich eine Mehrzahl von V-förmigen oder halbkreisförmigen Ausnehmungen aufweist, in die der Längsrandbereich des Mantels des Flachkabels einlegbar ist.

Das erfindungsgemäße Abmantelwerkzeug ist als Handbedienwerkzeug aus nur wenigen Einzelteilen realisierbar, so dass es günstig herstellbar ist. Es ermöglicht ein so schnelles und unproblematisches Abmanteln eines Flachbandkabels, wie man es nur von einem weit komplizierter aufgebauten Werkzeug erwarten würde.

Weitere vorteilhafte Ausgestaltungen sind den übrigen Unteransprüchen zu entnehmen.

Anhand der beiliegenden Zeichnungen wird die Erfindung noch näher erläutert. Es zeigen:
- Figur 1: das erfindungsgemäße Abmantelwerkzeug in perspektivischer Darstellung in der Außerbetriebsstellung,
- Figur 2: den Stirnendbereich mit den V-förmigen Ausnehmungen in vergrößerter Darstellung,
- Figur 3: eine der Figur 1 entsprechende Darstellung, jedoch mit Blick auf das andere Stirnende,
- Figur 4: eine der Figur 3 entsprechende Darstellung, jedoch mit dem teilweise aus dem Klemmelement herausgenommenen Messerhalter,
- Figur 5: den Messerhalter als Einzelheit in perspektivischer Darstellung,
- Figur 6: den mit der Handhabe ausgerüsteten Stirnendbereich des Messerhalters in vergrößerter Darstellung,
- Figur 7: das Klemmelement als Einzelheit mit geöffneten Klemmbacken,
- Figur 8: die Abmantelvorrichtung mit in das Klemmelement eingelegtem Flachkabel in der Stellung zur Durchführung von Schnitten quer zu den Leitern,
- Figur 9: eine der Figur 8 entsprechende Darstellung, jedoch zur Durchführung der Schnitte quer zu den Adern der gegenüberliegenden Seite,
- Figur 10: das Abmantelwerkzeug in der Stellung zur Durchführung eines Schnittes in Richtung der Leiter des Flachkabels,
- Figur 11: den Messerhalter in einer sprengbildlichen Darstellung zeigend und
- Figur 12: ein Flachkabel, bei dem ein Stück des Mantels entfernt ist; und
- Figur 13a-e: den Messerhalter und fünf aufeinanderfolgende Schritte beim Durchtrennen des Mantels..

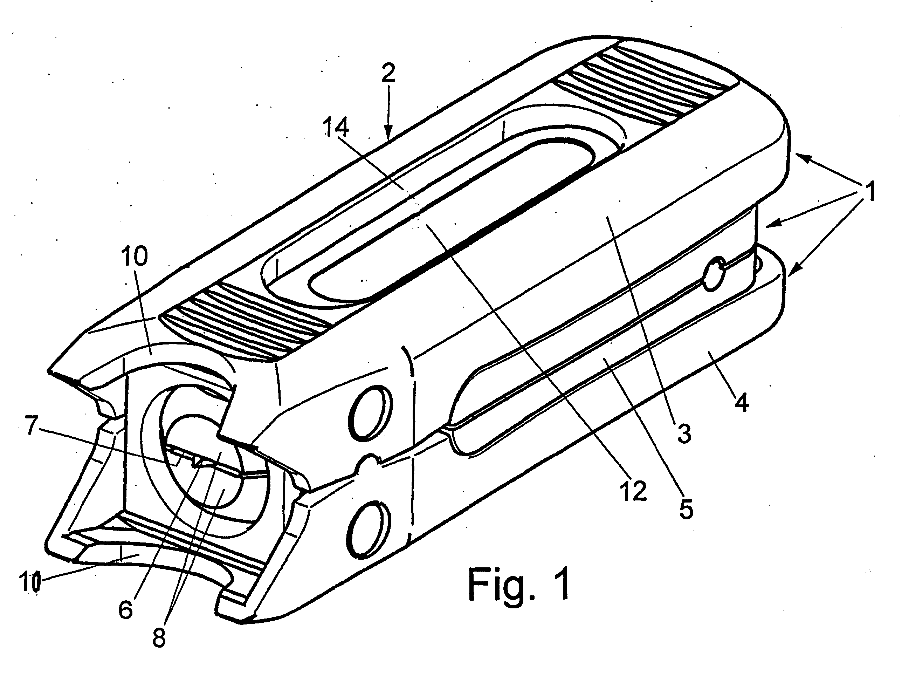

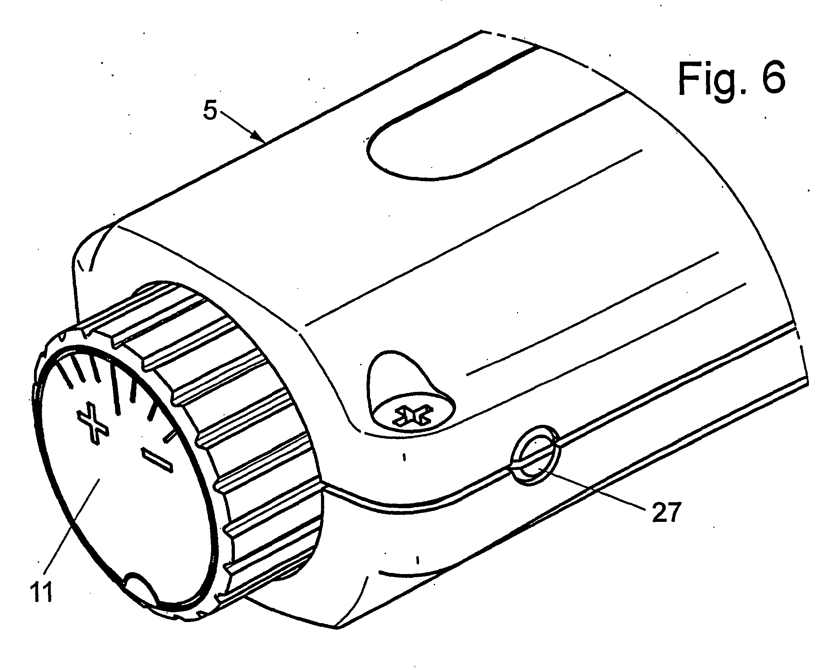

Das in den Figuren 1 bis 11 dargestellte Abmantelwerkzeug besteht aus zwei Funktionseinheiten, nämlich einem Klemmelement 2, welches zwei Klemmbacken 3, 4 aufweist, und einem Messerhalter 5 bzw. einer Messeraufnahme, in den/die ein noch näher beschriebenes Schneidmesser 6 eingesetzt ist.

Mit dem Werkzeug ist ein Mantel 31 eines Flachkabels 29 entfernbar.

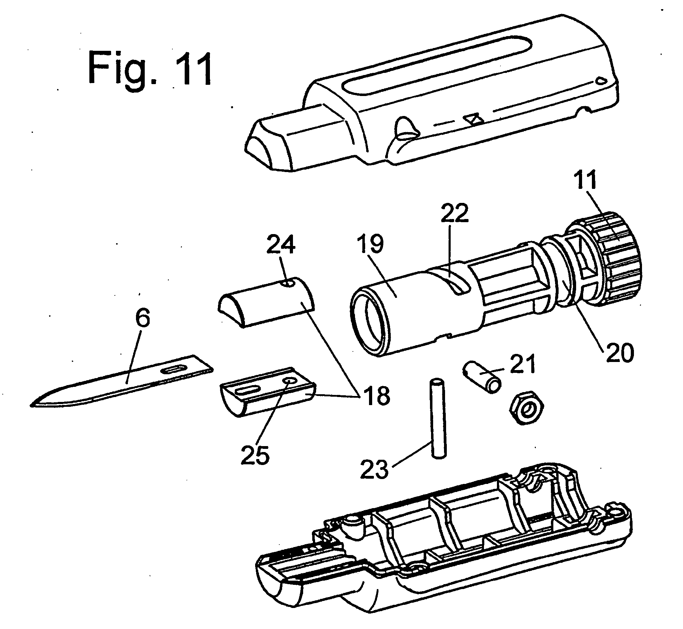

Das Schneidmesser 6 durchsetzt einen Schlitz 7 des Messerhalters 5, der durch die beiden Teile eines das Schneidmesser 6 aufnehmenden Schiebeelementes 18 gebildet wird, was noch anhand der Figur 11 erläutert wird.

Die beiden Klemmbacken 3, 4 sind an dem der Spitze des Schneidmessers 6 zugeordneten Stirnendbereich in nicht näher dargestellter Weise klammerartig gelenkig miteinander verbunden, so daß die beiden Klemmbacken 3, 4 in eine unter einem spitzen Winkel zueinander stehende Lage geschwenkt werden können.

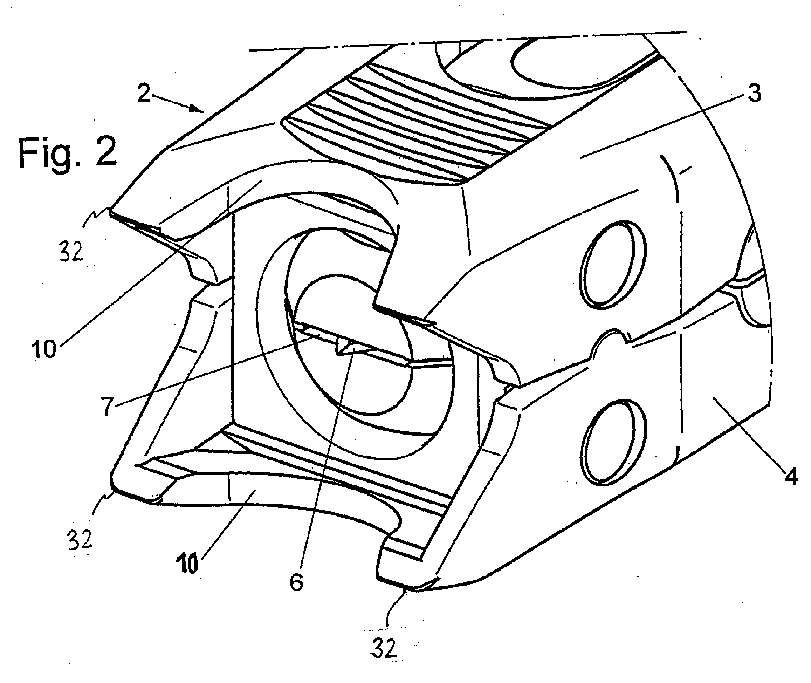

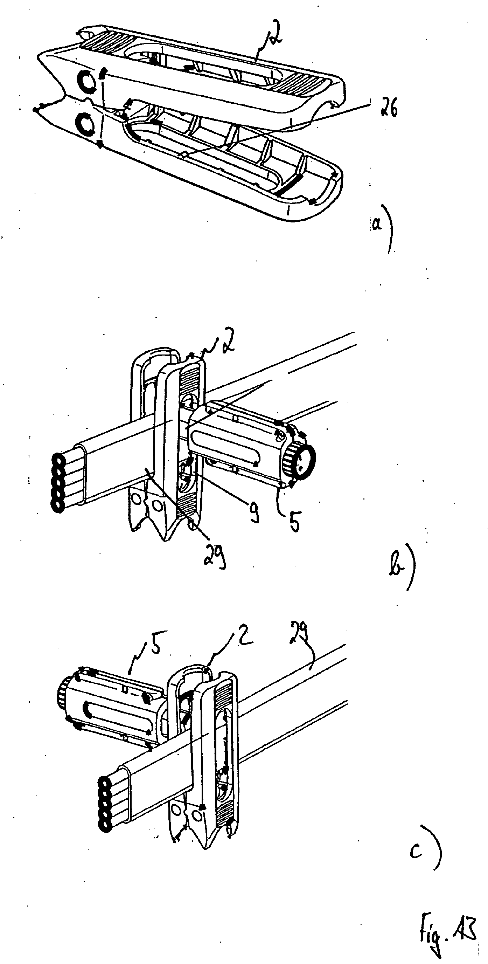

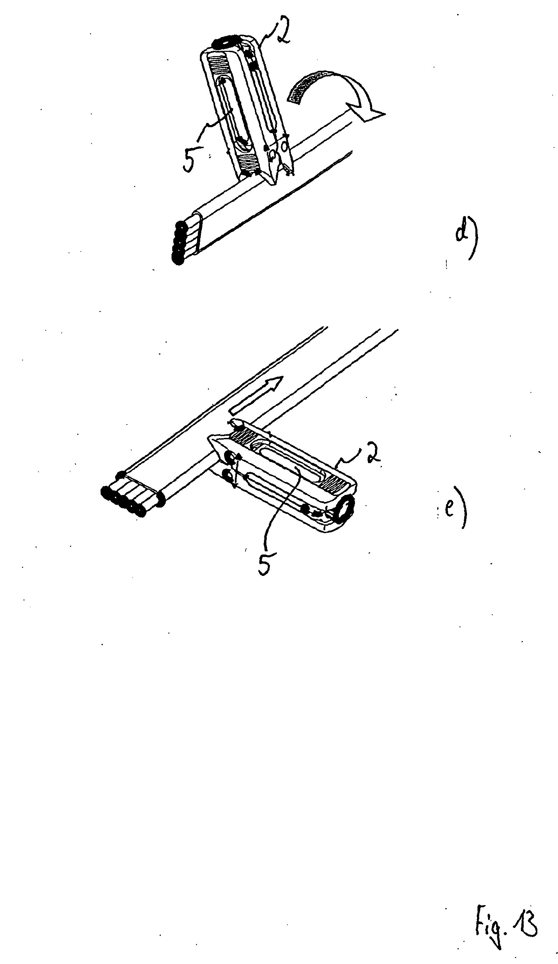

Wie die Figuren 1 und 2 zeigen, ist das im wesentlichen durch die beiden Klemmbacken 3, 4 gebildete Klemmelement 2 an der dem Schneidmesser 6 zugeordneten Endbereich mit jeweils zwei unterschiedlich konturierten geformten - hier abgerundeten - Ausnehmungen 9, 10 versehen, die der Führung des Abmantelwerkzeuges 1 dienen, wenn ein Schnitt um die abgerundeten Seitenbereiche (Fig. 13d) oder in Längsrichtung (Fig. 13e) des Flachkabels 30 durchgeführt wird.

Die Figur 2 zeigt den die Ausnehmungen 9, 10 aufweisenden Stirnendbereich in vergrößerter Darstellung.

Figur 2 zeigt, daß die Spitze des Schneidmessers 6 gegenüber dem Grund der Ausnehmungen 9, 10 vorsteht, so daß ein Eintauchen in den Mantel des Flachkabels möglich ist.

Figur 2 zeigt ferner, daß die Ausnehmungen 9, 10 am ihren freien Enden von Spitzen 32 begrenzt sind, die zum Aufbrechen des Kabelschlauches nutzbar sind, insbesondere auch, wenn noch kleinere Reste nicht durchtrennt worden sind.

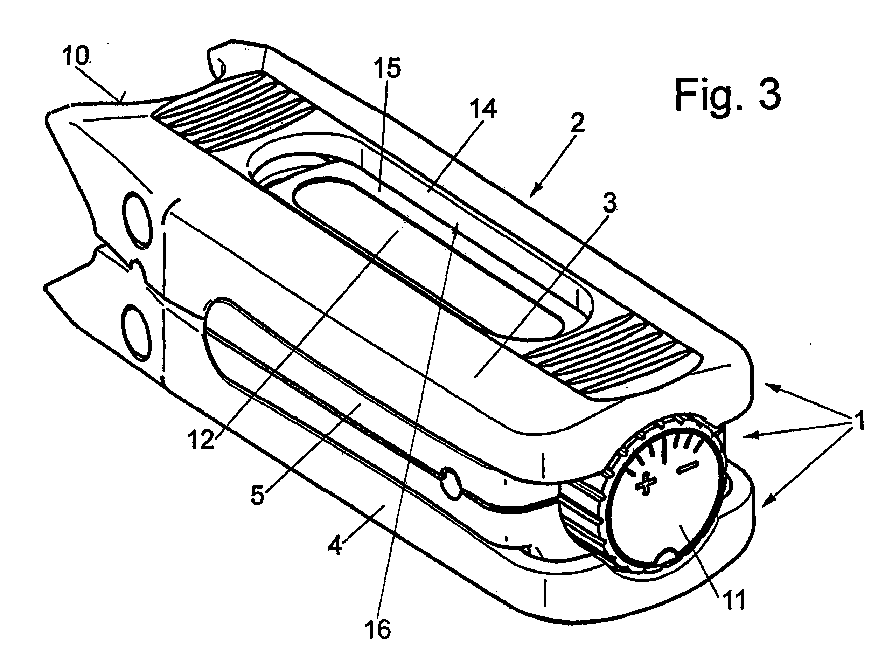

Figur 3 zeigt, daß der Messerhalter 5 an der dem Schneidmesser 6 gegenüberliegenden Seite mit einer drehbaren Handhabe in Form eines Drehknopfes 11 ausgestattet ist. Dieser Drehknopf 11 kann in beiden Richtungen gedreht werden und steht mit dem Schneidmesser 6 in einer festen Verbindung, so daß durch Drehung des Drehknopfes 11 das Schneidmesser 6 weiter aus dem Messerhalter 5 herausgefahren oder weiter eingefahren werden kann, wie anhand der Figur 11 noch näher erläutert wird. In welcher Richtung der Drehknopf 11 zu bewegen ist, wird durch die beiden Symbole "plus" und "minus" bestimmt.

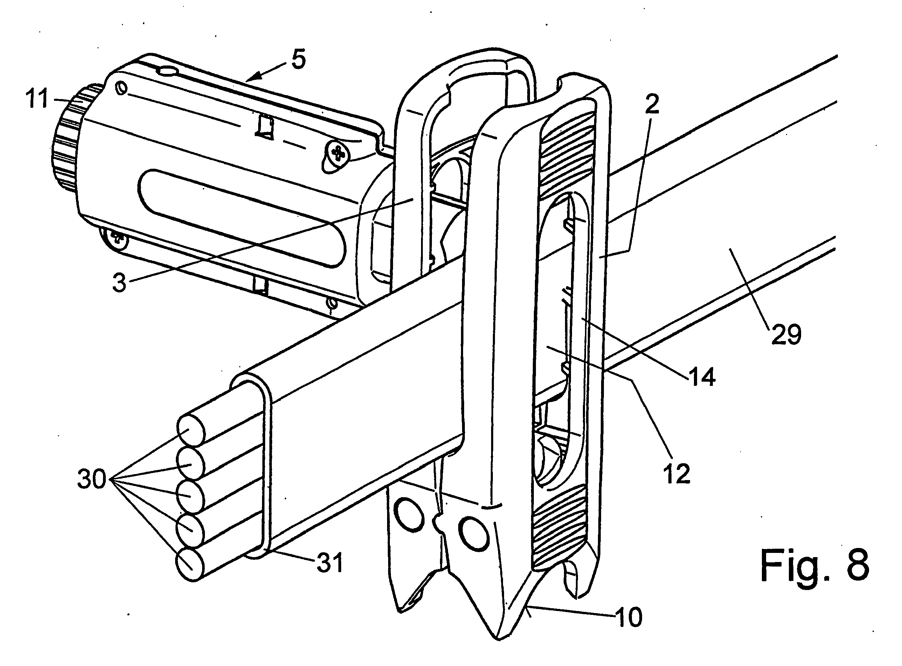

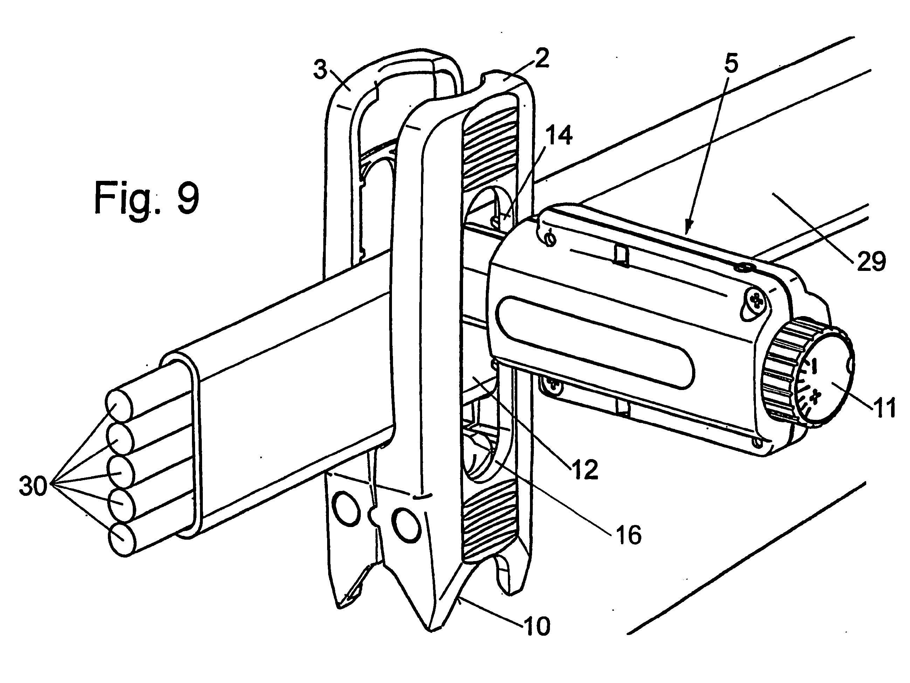

Wie die Figuren 1, 3, 4 und 5 zeigen, sind die beiden Klemmbacken 3, 4 mit in Längsrichtung verlaufenden Nuten 12, 13 versehen, die als Führung für den Messerhalter 5 dienen, wenn Schnitte quer zu den Leitern des Flachkabels in den Mantel eingebracht werden, wie noch anhand der Figuren 8 und 9 erläutert wird.

Wie insbesondere die Figuren 1 und 3 zeigen, liegen die Nuten 12 und 13 in Ausnehmungen 14, 15, die sich von außen nach innen erstrecken. Dadurch werden Auflagerflächen 16, 17 für den in die Nuten 12, 13 eingesetzten Messerhalter 5 gebildet. Dadurch wird der Messerhalter 5 gegenüber dem Klemmelement 2 exakt positioniert. Diese Ausnehmungen sind demzufolge an den einander abgewandt liegenden Seiten der Klemmbacken 3, 4 vorgesehen.

Wie Figur 11 zeigt, ist das Schneidmesser 6 in einem zweiteiligen Schiebeelement 18 festgelegt.

Dieses Schiebeelement 18 ist in einem mit dem Drehkopf 11 einstückig ausgebildeten Halterohr 19 angeordnet. Dieses Halterohr 19 ist mit einer Ringnut 20 versehen, die benachbart dem Drehknopf 11 angeordnet ist. In diese Ringnut 20 greift ein Sicherungsbolzen 21 ein, der fest in dem Messerhalter 5 eingesetzt ist. Dadurch wird das Halterohr 19 gegen Verschiebung in Längsrichtung gesichert. Das Halterohr 19 ist außerdem mit einer spiralförmig verlaufenden Nut 22 versehen, in die ein Bolzen 23 eingreift. Dieser Bolzen ist außerdem durch Bohrungen 24, 25 des Schiebeelementes 18 geführt. Dadurch werden die beiden Teile des Schiebeelementes 18 gehalten. Es ergibt sich aus der Figur 11, daß bei Drehung des Halterohres 19 durch den Drehgriff 11 sich das Schiebeelement 18 mit dem Schneidmesser 16 in Längsrichtung verschiebt, während das Drehrohr 19 sich in axialer Richtung nicht bewegt.

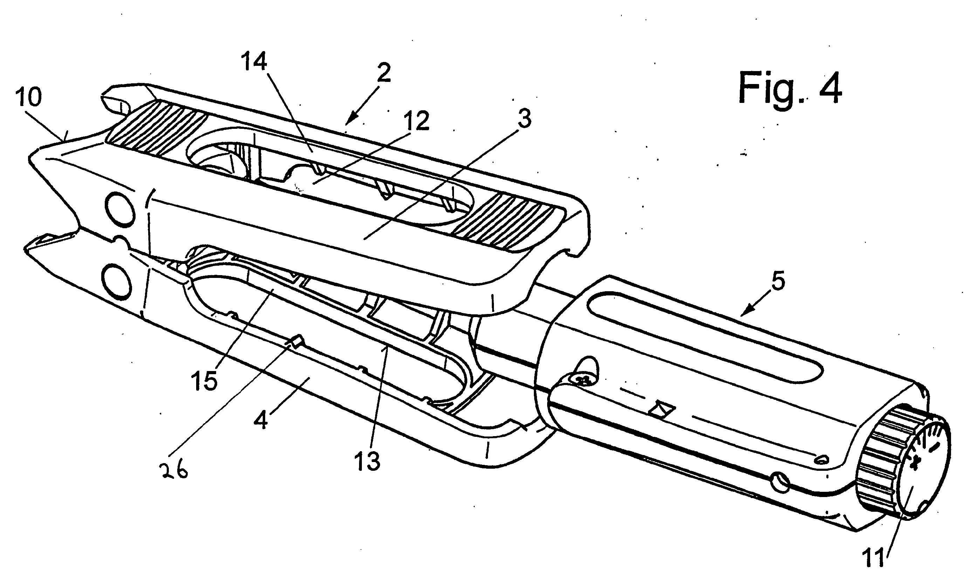

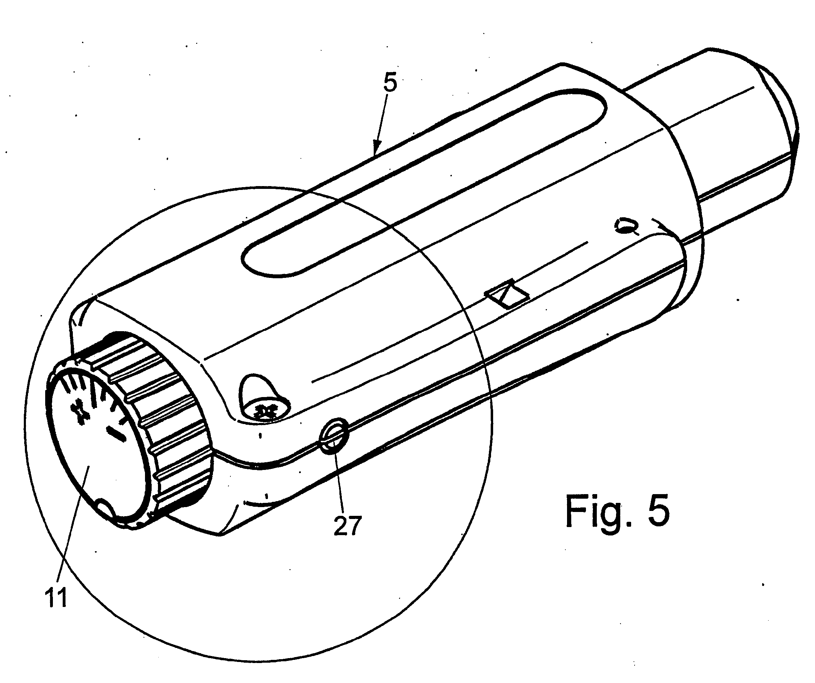

Figur 4 zeigt den teilweise aus dem Klemmelement 2 herausgenommenen Messerhalter 5. Besonders geht aus dieser Figur hervor, daß die beiden Klemmbacken 3, 4 im Querschnitt U-förmig gestaltet sind, und daß zur Bildung einer Aufnahmetasche für ein Flachkabel die seitlichen Ränder ausgespart sind. Zur Sicherung des Flachkabels sind die die Aussparung begrenzenden Ränder mit Zähnen 26 versehen, die sich in den Mantel des Flachkabels einschneiden. Die Figur 5 zeigt, daß der Messerhalter 5 mit einer Sicherungsschraube 27 versehen ist, die ein Verdrehen des Halterohres 19 verhindert. Um die Stellung des Schneidmessers 6 zu verändern, muß diese Sicherungsschraube 27 zunächst gelöst werden.

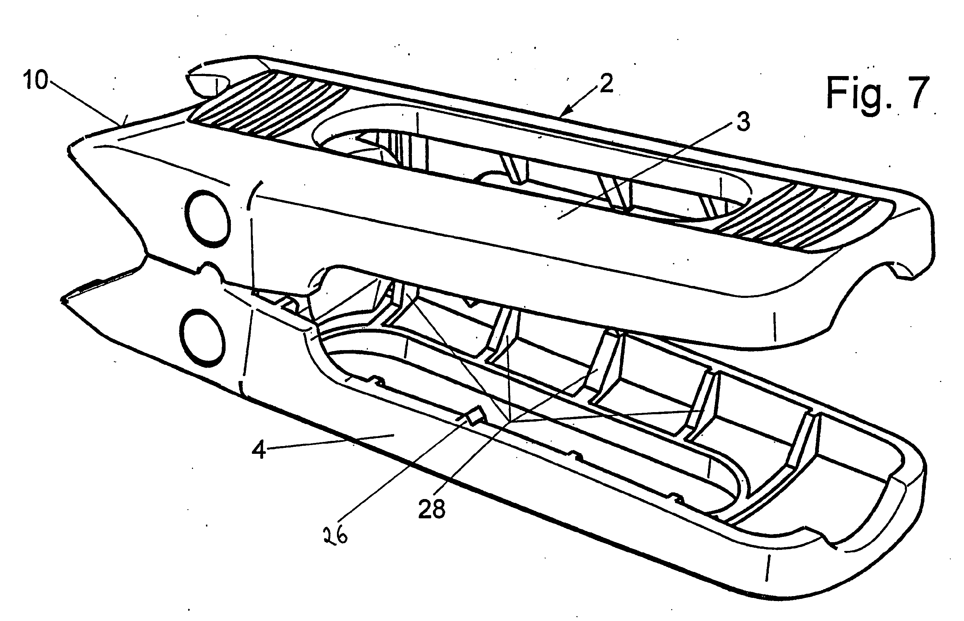

Die Figur 7 zeigt das in der Figur 4 dargestellte Klemmelement 2 in vergrößerter Darstellung. Daraus geht insbesondere der U-förmige Querschnitt der beiden Klemmbacken 3, 4 hervor. Außerdem zeigt diese Figur, daß die Klemmbacken durch Verstärkungsdreiecke 28 stabilisiert sind.

Die Figuren 8 und 9 zeigen, daß das Klemmelement 2 auf ein Flachkabel 29 aufsetzbar ist.

Das Flachkabel 29 ist mit dem Mantel 31 versehen, der über einen vorgegebenen Bereich entfernt werden soll.

Dazu wird der Messerhalter 5 entsprechend den Figuren 8 und 9 (siehe auch Fig. 13b, c) in die Nuten 12, 13 eingesetzt.

Nachdem an einer Seite ein Schnitt quer zu den Leitern 30 hergestellt wurde, kann der Messerhalter 5 von der in der Figur 8 bzw. 13b dargestellten Stellung in die in der Figur 9 bzw. 13d dargestellte Stellung umgesetzt werden.

Nachdem die einander versatzfrei gegenüberliegenden Schnitte durchgeführt wurden, wird das Klemmelement 2 am Flachkabel versetzt, so daß dann die beiden anderen Schnitte eingebracht werden können.

Insbesondere die Figur 9 zeigt, daß die jeweilige Nut 12, 13 eine Führung für den Messerhalter 5 bildet. Dazu ist der Messerhalter im Bereich des Schneidmessers 6 mit einem Ansatz versehen.

Danach wird der Messerhalter 5 in das Klemmelement 2 eingesetzt.

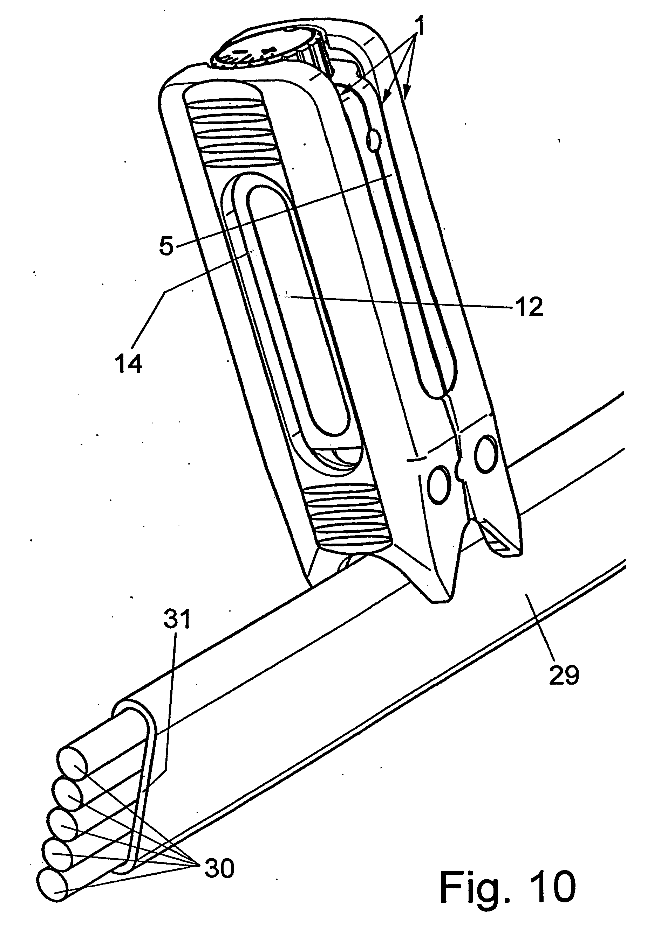

Fig. 10 und Fig. 13d deuten an, wie die Querschnitte einfach und schnell um die Seiten des Flachkabels verlängert werden. Dabei führen die beiden Ausnehmungen 10 mit etwas größerem Radius den Messerhalter 5 um die Seitenbereiche des Flachkabels. Derart werden am Flachkabel zwei vollständige 360°-Schnitte realisiert.

Figur 13e zeigt, wie sodann ein Schnitt in der Längsrichtung des Flachkabels 29 erfolgt, der die beiden Querschnitte verbindet. Hierbei führen die beiden weiteren, nahezu V-förmigen Ausnehmungen 10 das Flachkabel sicher an dessen Seite in Längsrichtung des Flachkabels 29.

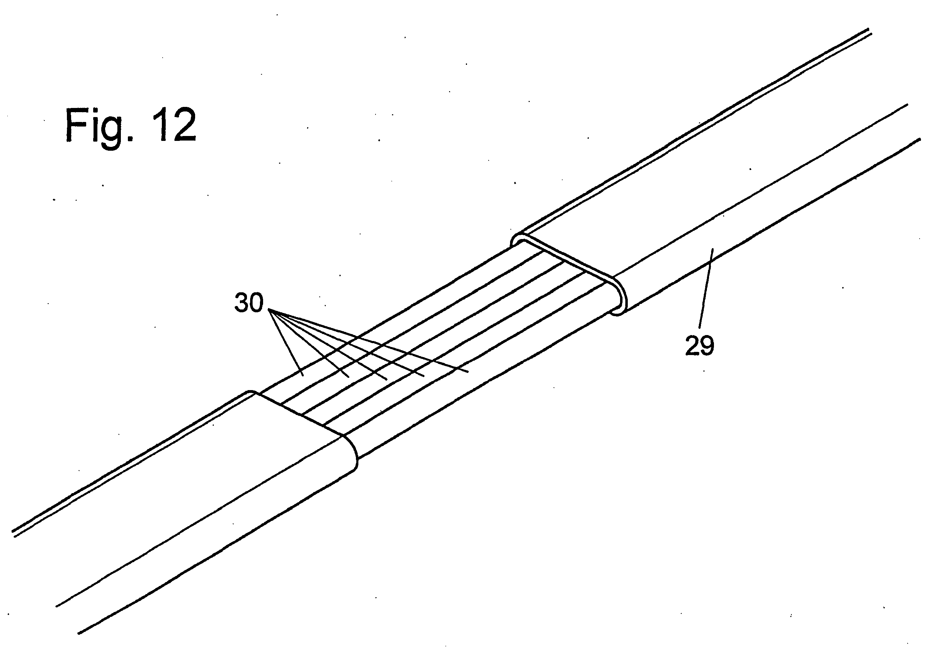

Durch eine Bewegung des Messerhalters wird derart der Rand des Mantels 31 eingeschnitten. Danach kann durch die quer zu den Leitern 30 liegenden Einschnitte das entsprechende Stück des Mantels 31 von den Leitern 30 abgezogen werden. Dies ist durch die Figur 12 dargestellt.

Besonders vorteilhaft ist, daß mittels des Klemmelementes 2 das Flachkabel 29 gehalten wird, und daß die beiden Klemmbacken 3, 4 des Klemmelementes 2 eine Führung für den Messerhalter 5 bilden. Dazu sind die beiden Klemmbacken 3, 4 mit Nuten 12, 13 versehen, durch die zur Bildung von Schnitten quer zu den Leitern 30 des Flachkabels 29 der Messerhalter 5 geführt ist. Die Ausnehmungen 9, 10 bilden jeweils Führungen und Schnitttiefenbegrenzter bei den Kantenschnitten um die Kanten und längs des Kabels.

### Bezugszeichen

- Abmantelwerkzeug: 1
- Klemmelement: 2
- Klemmbacke: 3
- Klemmbacke: 4
- Messerhalter: 5
- Schneidmesser: 6
- Schlitz: 7
- Ausnehmungen: 9
- Ausnehmungen: 10
- Drehknopf: 11
- Nut: 12
- Nut: 13
- Ausnehmung: 14
- Ausnehmung: 15
- Auflagerfläche: 16
- Auflagerfläche: 17
- Schiebeelement: 18
- Halterohr: 19
- Ringnut: 20
- Sicherungsbolzen: 21
- Nut: 22
- Bolzen: 23
- Zähne: 26
- Sicherungsschraube: 27
- Flachkabel: 29
- Leiter: 30
- Mantel: 31

## Patentansprüche

1. Abmantelwerkzeug (1) für ein Flachkabel (29), welches aus mehreren Leitern (30) und einem Mantel (31) besteh, mit einem am Flachkabel (29) festsetzbaren Klemmelement (2) und einen mit einem Schneidmesser (6) versehenen, bewegbaren Messerhalter (5), wobei das Klemmelement (2) als Führung für den Messerhalter (5) ausgebildet ist, **dadurch gekennzeichnet, dass** das Klemmelement (2) zwei gelenkig miteinander verbindbare Klemmbacken (3, 4) aufweist, die miteinander korrespondierenden, sich in Längsrichtung der Klemmbacken (3, 4) erstreckenden Nuten (12, 13) versehen sind, in denen der an das Schneidmesser (6) angrenzende Bereich des Messerhalters (5) quer zu den Leitern (30 des Flachkabels (29), verfahrbar ist, zur Durchführung von Schnitten in den Mantel (31) des Flachkabels (29).

2. Abmantelwerkzeug nach Anspruch 1, **dadurch gekennzeichnet, dass** das Abmantelwerkzeug (1) als Handbedienwerkzeug ausgelegt ist.

3. Abmantelwerkzeug nach Anspruch 1 oder 2, **dadurch gekennzeichnet, dass** die Innenkontur der zusammengefahrenen Klemmbacken (3, 4) einen Hohlraum begrenzen, in den der Messerhalter (5) bei Nichtgebrauch einbringbar ist.

4. Abmantelwerkzeug nach einem der vorstehenden Ansprüche, **dadurch gekennzeichnet, dass** die Nuten (12, 13) in Ausnehmungen (14, 15) liegen, die sich von außen nach innen erstrecken, so dass die an die Nuten (12, 13) angrenzenden Ränder Auflageflächen (16, 17) für den Messerhalter (5) bilden, und dass die Ausnehmungen (14, 15) an den einander abgewandt liegenden Seiten der Klemmbacken (3, 4) vorgesehen sind.

5. Abmantelwerkzeug nach einem der vorstehenden Ansprüche, **dadurch gekennzeichnet, dass** die Aussparungen (14, 15) an den einander abgewandt liegenden Seiten der Klemmbacken (3, 4) angeordnet sind.

6. Abmantelwerkzeug nach einem der vorstehenden Ansprüche, **dadurch gekennzeichnet, dass** der Messerhalter (5) einen Führungsansatz aufweist, dass zur Durchführung der Schnitte quer zu den Leitern (30) die durch den Ansatz gebildete Fläche an die an die Nut (12, 13) angrenzenden Ränder anliegt, und dass das Schneidmesser (6) in einem zweiteiligen Schiebeelement (18) festgelegt ist.

7. Abmantelwerkzeug nach einem der vorstehenden Ansprüche, **dadurch gekennzeichnet, dass** die Klemmbacken (3, 4) im Querschnitt U-förmig gestaltet sind, und dass die seitlichen Ränder die Aussparungen (14, 15) aufweisen, die im Abstand zu den das Schneidmesser (6) aufweisenden Ende des Abmantelwerkzeugs (1) enden.

8. Abmantelwerkzeug nach einem der vorstehenden Ansprüche, **dadurch gekennzeichnet, dass** die die Aussparungen (14, 15) begrenzenden Ränder mit vorstehenden Zähnen (26) ausgerüstet sind.

9. Abmantelwerkzeug nach einem der vorstehenden Ansprüche, **dadurch gekennzeichnet, dass** das Klemmelement (2) an der den Aussparungen zur Klemmung des eingelegten Flachkabels (2) gegenüberliegenden Stirnendbereich wenigstens eine, vorzugsweise mehrere, V-förmige oder halbkreisförmige Ausnehmungen (9, 10) aufweist, in die jeweils der Längsrandbereich des Mantels (31) des Flachkabels (29) einlegbar ist.

10. Abmantelwerkzeug nach einem der vorstehenden Ansprüche, **dadurch gekennzeichnet, dass** der Messerhalter (5) mit einem das Schneidmesser aufnehmenden Schiebeelement (18) ausgestattet ist, welches innerhalb eines verdrehbaren Halterohres (19) verfahrbar ist.

11. Abmantelwerkzeug nach einem der vorstehenden Ansprüche, **dadurch gekennzeichnet, dass** der Messerhalter (5) mit einer Einrichtung zur Einstellung der Schnitttiefe versehen ist.

12. Abmantelwerkzeug nach einem der vorstehenden Ansprüche, **dadurch gekennzeichnet, dass** der Messerhalter (5) mit einem das Schneidmesser aufnehmenden Schiebeelement (18) ausgestattet ist, welches innerhalb eines verdrehbaren Halterohres (19) verfahrbar ist.

13. Abmantelwerkzeug nach einem der vorstehenden Ansprüche, **dadurch gekennzeichnet, dass** das Halterohr (19) an der dem Schneidmesser (6) abgewandten Seite mit einer Handhabe in Form eines Drehknopfes (11) ausgestattet ist, dass das Halterohr mit einer radialen Ringnut (20) ausgestattet ist, in die ein Sicherungsbolzen (21) eingreift, und dass das Halterohr (19) mit einer spiralförmig verlaufenden Nut (22) ausgestattet ist, in die ein das Schiebeelement (11) durchdringender Bolzen (23) eingreift.

14. Abmantelwerkzeug nach einem der vorstehenden Ansprüche, **dadurch gekennzeichnet, dass** das Halterohr (9) mittels einer Sicherungsschraube (27) gegen Drehung gesichert ist.

## Claims

1. A stripping tool (1) for a ribbon cable (29) which consists of a plurality of conductors (30) and a sheath (31), with a clamping element (2) which can be fixed on the ribbon cable (29) and a movable blade holder (5) provided with a cutting blade (6), the clamping element (2) being formed as a guide for the blade holder (5), **characterised in that** the clamping element (2) has two clamping jaws (3, 4) which can be articulated together, which are provided with grooves (12, 13) which correspond with one another extending in the longitudinal direction of the clamping jaws (3, 4), in which grooves the region of the blade holder (5) adjoining the cutting blade (6) is displaceable transversely to the conductors (30) of the ribbon cable (29), for making cuts in the sheath (31) of the ribbon cable (29).

2. A stripping tool according to Claim 1, **characterised in that** the stripping tool (1) is designed as a manually-operated tool.

3. A stripping tool according to Claim 1 or 2, **characterised in that** the internal contours of the brought-together clamping jaws (3, 4) define a cavity into which the blade holder (5) can be introduced when not in use.

4. A stripping tool according to one of the preceding claims, **characterised in that** the grooves (12, 13) lie in recesses (14, 15) which extend from the outside inwards, so that the edges adjoining the grooves (12, 13) form resting surfaces for the blade holder (5), and **in that** the recesses (14, 15) are arranged on the sides of the clamping jaws (3, 4) which are remote from each other.

5. A stripping tool according to one of the preceding claims, **characterised in that** the cutouts (14, 15) are arranged on the sides of the clamping jaws (3, 4) which are remote from each other.

6. A stripping tool according to one of the preceding claims, **characterised in that** the blade holder (5) has a guide projection, **in that** for making the cuts transversely to the conductors (30) the surface formed by the projection lies against the edges adjoining the groove (12, 13), and **in that** the cutting blade (6) is fixed in a two-part sliding element (18).

7. A stripping tool according to one of the preceding claims, **characterised in that** the clamping jaws (3, 4) are U-shaped in cross-section, and **in that** the lateral edges have the cutouts (14, 15) which end at a distance from the end of the stripping tool (1) which has the cutting blade (6).

8. A stripping tool according to one of the preceding claims, **characterised in that** the edges defining the cutouts (14, 15) are equipped with projecting teeth (26).

9. A stripping tool according to one of the preceding claims, **characterised in that** the clamping element (2) has, on the end-face region located opposite the cutouts for clamping the inserted ribbon cable (2), at least one, preferably a plurality of, V-shaped or semicircular recess(es) (9, 10), in which in each case the longitudinaledge region of the sheath (31) of the ribbon cable (29) can be placed.

10. A stripping tool according to one of the preceding claims, **characterised in that** the blade holder (5) is equipped with a sliding element (18) which receives the cutting blade, which element is movable within a twistable holding tube (19).

11. A stripping tool according to one of the preceding claims, **characterised in that** the blade holder (5) is provided with a means for setting the cutting depth.

12. A stripping tool according to one of the preceding claims, **characterised in that** the blade holder (5) is equipped with a sliding element (18) which receives the cutting blade, which element is movable within a twistable holding tube (19).

13. A stripping tool according to one of the preceding claims, **characterised in that** the holding tube (19) on the side remote from the cutting blade (6) is equipped with a handle in the form of a rotary knob (11), **in that** the holding tube is equipped with a radial annular groove (20) in which a securing pin (21) engages, and **in that** the holding tube (19) is equipped with a helically extending groove (22) into which a pin (23) which penetrates the sliding element (11) engages.

14. A stripping tool according to one of the preceding claims, **characterised in that** the holding tube (9) is secured against rotation by means of a securing screw (27).

## Revendications

1. Outil à dénuder (1) pour un câble plat (29) se composant de plusieurs conducteurs (30) et d'une gaine (31), comportant un élément de serrage (2) pouvant être fixé sur le câble plat (29) et un guide-lame (5) mobile, pourvu d'une lame coupante (6), sachant que l'élément de serrage (2) est formé comme guidage pour le guide-lame (5), **caractérisé en ce que** l'élément de serrage (2) présente deux mâchoires de serrage (3, 4) pouvant être reliées entre elles de manière articulée, lesquelles sont pourvues de rainures (12, 13) correspondant les unes aux autres, s'étendant dans la direction longitudinale des mâchoires de serrage (3, 4), dans lesquelles rainures la zone du guide-lame (5) adjacente à la lame coupante (6) peut être déplacée de manière transversale par rapport aux conducteurs (30) du câble plat (29), pour exécuter des coupes dans la gaine (31) du câble plat (29).

2. Outil à dénuder selon la revendication 1, **caractérisé en ce que** l'outil à dénuder (1) est configuré comme un outil manuel.

3. Outil à dénuder selon la revendication 1 ou 2, **caractérisé en ce que** le contour intérieur des mâchoires de serrage (3, 4) se rencontrant délimite un espace creux dans lequel peut être mis en place le guide-lame (5) dans le cas de non-utilisation.

4. Outil à dénuder selon l'une quelconque des revendications précédentes, **caractérisé en ce que** les rainures (12, 13) se trouvent dans des évidements (14, 15) qui s'étendent depuis l'extérieur vers l'intérieur si bien que les bordures adjacentes aux rainures (12, 13) forment des surfaces d'appui (16, 17) pour le guide-lame (5), et **en ce que** les évidements (14, 15) sont prévus sur les côtés des mâchoires de serrage (3, 4) opposés les uns aux autres.

5. Outil à dénuder selon l'une quelconque des revendications précédentes, **caractérisé en ce que** les évidements (14, 15) sont disposés au niveau des côtés des mâchoires de serrage (3, 4) opposés les uns aux autres.

6. Outil à dénuder selon l'une quelconque des revendications précédentes, **caractérisé en ce que** le guide-lame (5) présente un embout de guidage, **en ce que** pour exécuter les coupes de manière transversale par rapport aux conducteurs (30), la surface formée par le embout se trouve sur les bordures adjacentes à la rainure (12, 13), et **en ce que** la lame coupante (6) est fixée dans un élément coulissant (18) en deux parties.

7. Outil à dénuder selon l'une quelconque des revendications précédentes, **caractérisé en ce que** les mâchoires de serrage (3, 4) sont configurées en forme de U dans la section transversale, et **en ce que** les bordures latérales présentent les évidements (14, 15) qui aboutissent à distance de l'extrémité de l'outil à dénuder (1) présentant la lame coupante (6).

8. Outil à dénuder selon l'une quelconque des revendications précédentes, **caractérisé en ce que** les bordures délimitant les évidements (14, 15) sont équipées de dents (26) faisant saillie.

9. Outil à dénuder selon l'une quelconque des revendications précédentes, **caractérisé en ce que** l'élément de serrage (2) présente au niveau de la zone d'extrémité frontale faisant face aux évidements pour le serrage du câble plat (2) posé au moins un, de préférence plusieurs évidements (9, 10) en forme de V ou en forme de demi-cercle, dans lesquels respectivement la zone de bord longitudinale de la gaine (31) du câble plat (29) peut être posée.

10. Outil à dénuder selon l'une quelconque des revendications précédentes, **caractérisé en ce que** le guide-lame (5) est équipé d'un élément coulissant (18) recevant la lame coupante, lequel élément coulissant peut être déplacé à l'intérieur d'un tube de soutien (19) pouvant être tordu.

11. Outil à dénuder selon l'une quelconque des revendications précédentes, **caractérisé en ce que** le guide-lame (5) est pourvu d'un système servant à ajuster la profondeur de la coupe.

12. Outil à dénuder selon l'une quelconque des revendications précédentes, **caractérisé en ce que** le guide-lame (5) est équipé d'un élément coulissant (18) recevant la lame coupante, lequel élément coulissant peut être déplacé à l'intérieur d'un tube de soutien (19) pouvant être tordu.

13. Outil à dénuder selon l'une quelconque des revendications précédentes, **caractérisé en ce que** le tube de soutien (19) est équipé au niveau du côté opposé à lame coupante (6) d'une manette sous la forme d'un bouton tournant (11), **en ce que** le tube de soutien est équipé d'une rainure annulaire (20) radiale, dans laquelle une goupille de sécurité (21) vient en prise, et **en ce que** le tube de soutien (19) est équipé d'une rainure (22) s'étendant en forme de spirale, dans laquelle une goupille (23) traversant l'élément coulissant (11) vient en prise.

14. Outil à dénuder selon l'une quelconque des revendications précédentes, **caractérisé en ce que** le tube de soutien (9) est sécurisé contre toute torsion au moyen d'une vis de sécurité (27).
